# EUROPEAN PATENT APPLICATION

(11) **EP 2 072 954 A1**
(43) Date of publication of application: **24.06.2009**
(21) Application number: 08425487.9
(22) Date of filing: 17.07.2008
(51) Int. Cl.: G01C 21/36

(54) **Method for representating the environment using panoramic photos in navigation systems**

(30) Priority: 20.12.2007 IT MI20072391
(71) Applicant: Telecom Design Srl, 25036 Palazzlo sullíOlgio (BS) (IT)
(72) Inventor: Carraro, Gualtiero, 2510 Brescia (BS) (IT)

(57) **Abstract**

The present invention pertains to a method for tridimensional representation of the environment on satellite navigators through 360° photos.

The method comprises the linking of the said photos to the satellite coordinates and to the position of the objects of the photos in respect of cardinal points.

Advantageously, this method allows the display of points of interest situated on a route, both in preview and once reached by the user, with the same elevation of the real environment and according to the variations of the user's view.

## Description

1 "Method for tridimensional representation of the environment on satellite navigators through 360° photos"

### 2 TECHNICAL FIELD

3 The present invention pertains to a method for tridimensional representation of the environment on satellite navigators through 360° photos.

4 The satellite navigation is a technology capable to the localization of a point on the earth and to the dynamical display of an object moving along a route.

5 The localization of the point is made possible by the triangulation, i.e. by the calculus of the distance between the satellites, at least 4, detected by the satellite receiver.

6 The satellite localization has the manifest advantages of improving the orientation along a route, of conveying pieces of information - for example cultural, historic, artistic, commercial - and of improving the driving safety and fluency.

7 The visualization of an object moving along a route is made possible by the use of digital vectorial maps, integrated with the data of a satellite system.

### 8 STATE OF THE ART

9 The state of the art of the satellite navigation comprises digital bidimensional maps that offer a worldwide covering of routes and about road signes. But the bidimensional mapping is characterized by an high° of abstractness that reduce the usability of satellite navigation system for a large number of users; in turn the reduced understanding of the pieces of information about the route, close the door on an effective orientation.

10 A diffused solutions try to remedy to this technical problem orienting the maps in a perspective view: inclinated in the same direction of the route, the map gives more intutive pieces of information about the way.

11 Another solution consists in the insertion in the map of altimetrical data that deform the cartographic surface in order to make the said map more similar to the environment, by displaying slopes and declines, hills and mountains.

12 Another technical problem pertains to the understandability and to the quality of pieces of information concerning point of interests and sightseeings displaced along a route: the use of bidimensional displaying systems only allows the insertion, in corrisponce to the said points and sightseeing, of symbols and icons that don't reproduce a realistic image and that only collocate on the map and classificate the points of interests (e.g.: petrol station, restaurant, memorial).

13 Another method, recently developed, is based on the insertion of tridimensional elements in vectorial maps.

14 In this case, displaying system shows tridimensional models of referential buildings (i.e. used such as landmark). Signally, in these tridimansional maps drawn or photografed textures (bitmap images used to cover the surface of a virtual object, with graphic softwares) are applied on building drawed with CAD technics.

15 On an urban perspective map, this technology displays to the user main buildings of a city with the intention of improving his orientation.

16 But the view, generally a bird's eye view, has an inclination higher compared with the driver's one, in order to widen the sight and to improve the visualization of the road directrixes, since that roads don't have a remarkable elevation reproducible with tridimensional models.

17 One development of this technology, under project, is the insertion, in the digital maps, of the elevation of all buildings of one city.

18 But these displays are: rough, because of the ineffectiveness of CAD technology; expensive, because of the high number of required surveys; often scarcely matched with the true environment, because of, for example, the frequent presence of scaffolds on the buildings.

19 Moreover, the presence of the buildings covers routes and so reduces their visibility in perspective views.

20 Finally, the reproduction of tridimensional models on digital maps for the satellite navigation requires powerful graphic cards and processors generally don't integrated in satellite navigation system.

21 Another technical problem pertains to the need to give warning to the user of the approach of a traffic articulation (e.g. a crossroad): the state of the art comprises the vocal signalling of a turn with an advance of some hundreds of meters, but without the support of images.

22 Disadvantageously, present technology is an incomplete and partially satisfactory solution of the above mentioned technical problems.

23 Because of the gradual diffusion of satellite navigation system is felt necessity of a solution that allows an intuitive view of pieces of information concerning a route.

24 It is also even more felt the necessity of usable pieces of information concerning sightseeings, points of interest, crossroads, before that the users reach them.

25 Moreover, it is felt the necessity of displays matched with the real environment.

26 It is an aim of the present invention to make available a method that provides pieces of information about the route more intuitive, by means of a display more corresponding to the real environment.

27 It is also an aim of the present invention to offer an effective visualization of the point of interest and crossroads, in advance to the reaching of them by a user moving along a route.

28 Another aim of the present invention is providing a display that give further pieces of information about the external enviroment, besides the localization and classification of points of interests.

29 It is further aim of the present invention to offer a display technology that reproduces the environment with the same point of view of the user and with the same elevation of the real environment.

30 These and other aims are obtained by the present invention that refers to a tridimensional method for environment displaying in the technical field of satellite navigation.

31 The said method is based on the insertion in digital maps of georeferenced 360° photos.

32 The tridimensional displaying of the external environment offers a quality of reproduction and a matching to the real much better than in the displaying systems until now implemented.

33 Advantageously, the superposition between the map, displayed in a perspective modality, and the 360° photo allows a safer orientation of the user and provides more detailed pieces of information, for example geographical, turist, commercial or about road conditions.

34 360° photos are obtained through the use of a particular kind of photographic survey that, by the means of several methods, provides a realistic image that surrounds on all sides the point in which the photographic apparatus is putted.

35 The use of 360° photos in satellite navigation systems according to the present invention requires specific photographic methods.

36 First of all, photo shoot must take in consideration that the 360° view is homocentric: this means that the photographic apparatus must be putted for example in the center of a crossroad, in order to obtain a view comprising many directrixes.

37 Moreover, the photographic apparatus must be capable to identify the satellite coordinates of the geographical place photographed.

38 The association between a 360° photo and the said satellite coordinates can be performed both contextually and in a later phase: in the second hypothesis, the association is obtained through a georeferenced map.

39 This method offers the displaying of 360° photos on the screen of a satellite navigation system, with a dynamic correspondence between the visualization of the photos and the movement of the user along the route.

40 Moreover, the present invention is based on the use of photos taken by putting the photographic apparatus at a suitable distance from buildings and other vertical objects, in the center of a place - way or square - free from temporary visual covers.

41 It is also possible a photo retouching to remove visual elements that could disturb the navigation, for example cars or pedestrians.

42 Advantageously, this method of shootings offers the photographic reproduction of everything surrounds the photographic apparatus, included objects very far from it.

43 Further advantage of the present invention is the rotation of the 360° photo determined by the movement of the user around the object photographed, reproducing modifications of the user's view. The position of the object photografed in respect of cardinal points is determined during the photo shooting; then this reference is associated to the 360° photo.

44 According to the present invention, 360° photos are visualized in satellite cartography in a tridimensional projection - e.g. spheric or cylindrical - on a map for the satellite navigation.

45 Advantageously, the cylindrical or spheric projection solves effectively the problem of the aberration caused by the 360° photo.

46 On the semisphere is projected only the upper part of the 360° photo, while the lower part is covered by the map's plan. These method reduces to a great° the dimensions of the photographic images, so the requirement of memory and calculus.

47 According to the method of the present invention, the photo is visible on the map in the point of the objects that the same photo reproduces.

48 360° photo is located on the map's horizon, in every direction. In other words, the user see the map in a perspective view on the lower part of the screen and the 360° photo's semisphere in the upper part of the screen.

49 When the point of view of the user becomes closer to the point of the photo shooting, the method of the present invention makes visible on the screen of a navigation system the semisphere that, in the interior view, displays the photografic image in a realistic way.

50 In accordance with the invention, the method of tridimensional representation of the environment, also offers to the user an anticipated visualization for example of a crossroad.

51 Thanks to the memorization of the route and of the 360° photos available, it is possible an advance view of the cross roads, corresponding to the audio signal that indicates for example in which direction the user have to turn with an advance of hundreds of meters.

52 With the insertion of 360° photos in maps for the satellite navigation in accordance to the present invention, some hundreds of meters before a cross road, the latter becomes visible on the screen of a navigation system, with the animation, for example, of a turn.

53 This function gives to the user instructions about a maneuver that must be executed, with the advance visualization of the environent in which the maneuver will be performed.

54 Another preview mode is the visualization of a miniature that reproduces a closer point of interest, projected in the right perspective.

55 Further advantage of the present invention is that the integration between map and photos determines on the navigator's screen the reproduction of the real environment elevation: the user perceives vertical reference to choose the right way.

56 360° photos could be used in the satellite navigation to the purpose of orientation or, interrupting the navigation, with an informative function about the environment. In the second option the 360° photo could be visualized in the route preview, becoming an explicative tool about the environment.

57 The method in accordance to the present invention can be implemented in every satellite navigation system that supports digital maps and tridimensional visualization modes, such as for example satellite navigators, Personal Navigation Devices, smart phones with navigation system and PDA.

### 58 DESCRIPTION OF DRAWINGS

59 Aspects and advantages of this invention will be clearer from the following explanatory but not restrictive description in order to enclosed plans in which:

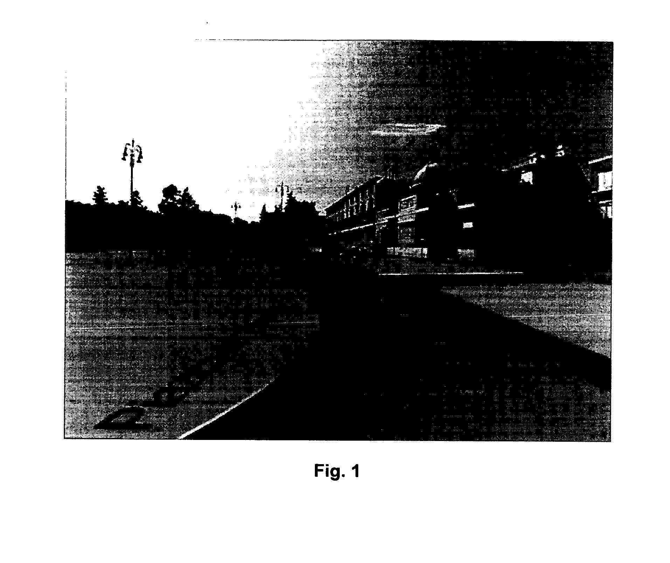

60 Fig. 1 shows a 360° photo localized on a digital map in the geographical point of his subject, i.e. the object (e.g. buildings) that the photo reproduces.

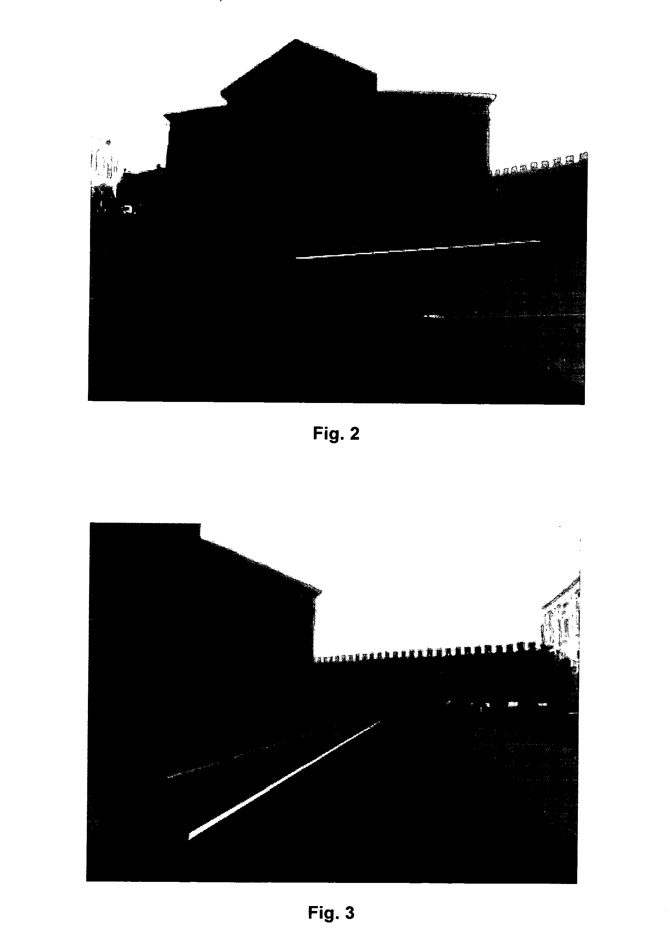

61 Fig. 2 and Fig. 3 shows the modification in the visualization of the 360° photo in accordance to the movement of the user along a route.

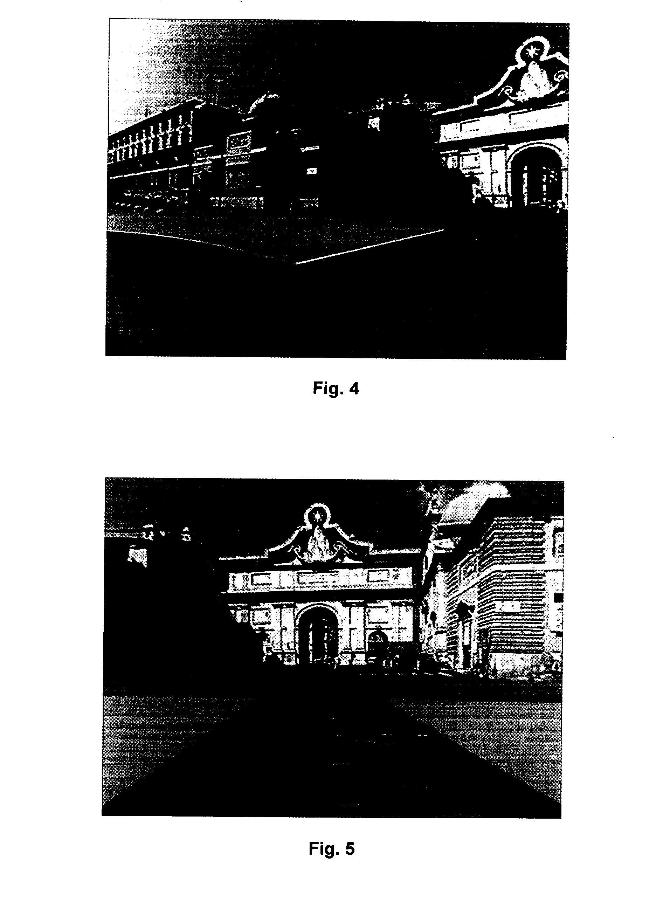

62 Fig. 4 and Fig. 5 reproduce the progressive rotation of a 360° photo in accordance to the modification of the user's view along the route

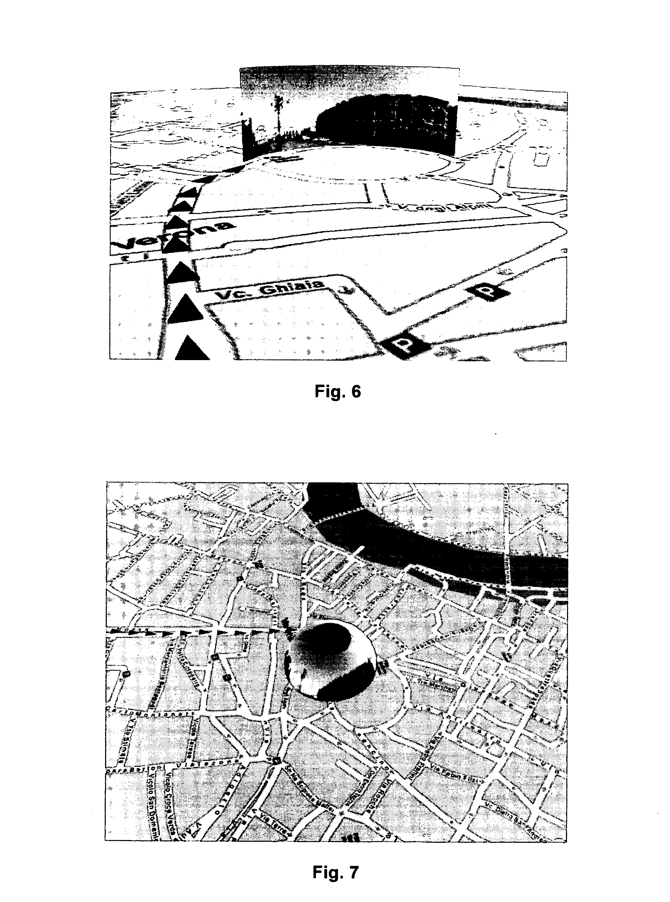

63 Fig. 6 shows the preview of a point reproduced by a 360° photo along the route

64 Fig. 7 reproduces a 360° photo in semispheric projection

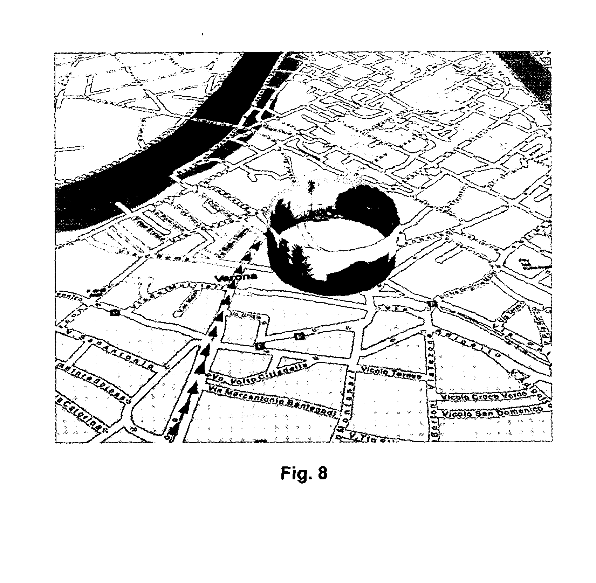

65 Fig. 8 reproduces a 360° photo in cylindrical projection

## Claims

1. Method for tridimensional representation of the environment on satellite navigators through 360° photos **characterized in that** it is directed to the use in satellite navigation systems and **in that** the said photos are linked to the satellite coordinates of the point of the photo shot (Fig. 1)

2. Method **characterized in that** it determines the display of the 360° photos in correspondence to (Fig. 2, Fig. 3) points of interests and crossroads along the way of the user.

3. Method **characterized in that** the said photos are shooted in correspondence of traffic articulations and junctions, avoiding or erasing with photo retouch object that could distrurb the navigation

4. Method **characterized in that** it determines the rotation (Fig. 4, Fig. 5) of the said photos according to the modification of the view of a moving user: if the user make a turn, the image turns around him.

5. Method **characterized in that** it gives to the user, moving or in preview of the route (Fig. 6), pieces of information, by means of 360° photos, about the points of interests along the route, displaying these points in the image and describing them with multimedia pieces of information.

6. Method **characterized in that** the displaying of the said photos is realized in tridimensional projection, spherical (Fig. 7) or cylindrical (Fig. 8), as a circular backdrop of the navigation map, putted on the road level

7. Method **characterized in that** the said photos are displayed with the same elevation (Fig. 1, Fig. 4, Fig. 5) of the real environment, giving to the user vertical environmental references.
